# EUROPÄISCHE PATENTSCHRIFT

(11) **EP 1 333 184 B1**
(45) Veröffentlichungstag und Bekanntmachung des Hinweises auf die Patenterteilung: **04.05.2005**
(21) Anmeldenummer: 02028372.7
(22) Anmeldetag: 18.12.2002
(51) Int. Cl.: F16B 13/14, F16B 13/06, F16B 43/00, F16B 13/08

(54) **Spreizanker**
Expansion anchor
Dispositif d'ancrage expansible

(30) Priorität: 05.02.2002 DE 10204591
(43) Veröffentlichungstag der Anmeldung: 06.08.2003
(73) Patentinhaber: fischerwerke Artur Fischer GmbH & Co. KG, 72178 Waldachtal (DE)
(72) Erfinder: Frischmann, Albert, 79341 Kenzingen (DE)

(56) Entgegenhaltungen:
- DE-A- 19 749 571
- GB-A- 2 212 181
- US-A- 4 034 567
- US-A- 4 187 040

## Beschreibung

Die Erfindung betrifft einen Spreizanker mit den Merkmalen des Oberbegriffs des Anspruchs 1 (US 4 187 040 A).

Derartige Spreizanker sind an sich bekannt. Sie weisen üblicherweise einen Ankerschaft mit einem Gewinde an einem hinteren Ende und einem Spreizelement, das zur Verankerung des Spreizankers aufspreizbar ist, an einem vorderen Ende auf. Das Spreizelement ist vielfach als Hülse ausgebildet, die in einem Spreizbereich geschlitzt ist. Zur Verankerung wird beispielsweise ein Konus des Ankerschafts in das Spreizelement eingezogen oder umgekehrt das Spreizelement auf den Konus aufgeschoben und dadurch aufgespreizt, der Spreizanker wird dadurch in einem Bohrloch in einem Verankerungsgrund verankert. Der Verankerungsgrund ist beispielsweise eine Wand. Da der Ankerschaft Spiel im Bohrloch und ein zu befestigender Gegenstand Spiel auf dem Ankerschaft aufweist ist eine Querabstützung des zu befestigenden Gegenstandes gering.

Der Erfindung liegt die Aufgabe zugrunde, einen Spreizanker der vorstehend erläuterten Art so auszubilden, dass er eine verbesserte Querabstützung eines zu befestigenden Gegenstandes aufweist.

Diese Aufgabe wird erfindungsgemäß durch die Merkmale des Anspruchs 1 gelöst. Der Ankerschaft des erfindungsgemäßen Spreizankers weist einen Füllkanal auf, durch den Mörtel in ein Bohrloch einfüllbar ist, in welches der Spreizanker eingesetzt ist. Der Füllkanal ermöglicht es, Mörtel in das Bohrloch und in ein Durchsteckloch im zu befestigenden Gegenstand, durch welches der Spreizanker durchgesteckt ist, einzufüllen. Der Mörtel stützt sowohl den Ankerschaft im Bohrloch als auch den zu befestigenden Gegenstand am Ankerschaft ab, wodurch eine Querabstützung (radial zum Ankerschaft) des zu befestigenden Gegenstandes verbessert ist. Des Weiteren weist der erfindungsgemäße Spreizanker eine Lochscheibe (Unterlegscheibe) auf, die an einer dem Verankerungsgrund abgewandten Seite auf den zu befestigenden Gegenstand und den Ankerschaft aufgesetzt ist oder wird. Die Lochscheibe weist eine Austrittsöffnung für in das Bohrloch gefüllten Mörtel auf, durch die Mörtel austritt, wenn das den Ankerschaft umgebende Bohrloch und das Durchsteckloch im zu befestigenden Gegenstand mit Mörtel gefüllt sind. Die Austrittsöffnung ermöglicht eine Kontrolle, ob das Bohrloch und das Durchsteckloch mit Mörtel gefüllt sind.

Eine Ausgestaltung der Erfindung sieht eine Lochscheibe mit einem Loch für den Durchtritt des Ankerschafts vor, wobei das Loch eine Umfangsausweitung an einer Stelle des Umfangs aufweist, die die Austrittsöffnung für den Mörtel bildet. Das Loch kann beispielsweise schlüssellochförmig sein. Diese Ausgestaltung der Erfindung hat den Vorteil, dass die Lochscheibe einfach herstellbar ist und sie stellt sicher, dass die Austrittsöffnung für den Mörtel mit dem Durchsteckloch in einem mit dem Spreizanker befestigten Gegenstand kommuniziert.

Eine Mörtelaustrittsöffnung des Füllkanals ist bei einer Ausgestaltung der Erfindung an einer Stelle des Ankerschafts vorgesehen, die sich innerhalb des Bohrlochs befindet, wenn der Spreizanker wie vorgesehen gesetzt ist. Dadurch wird erreicht, dass der Mörtel das Bohrloch zumindest in einem hinteren, dem befestigten Gegenstand zugewandten Bereich und das Durchsteckloch im befestigten Gegenstand ausfüllt, bevor der Mörtel durch die Austrittsöffnung der Lochscheibe austritt. Dadurch wird derAnkerschaft in dem Bereich, in dem eine Querbeanspruchung auftreten kann, abgestützt.

Eine Ausgestaltung der Erfindung sieht eine Dichtung zwischen einer Mörtelaustrittsöffnung des Füllkanals und dem Spreizelement vor. Die Dichtung vermeidet, dass Mörtel in einen vorderen Bereich des Spreizankers und des Bohrlochs gelangt, in dem sich das Spreizelement befindet. Dazu muss die Dichtung nicht hermetisch am Bohrloch abdichten, es schadet in den meisten Fällen nicht, wenn eine geringe Mörtelmenge an der Dichtung vorbei in den vorderen Bereich des Bohrlochs übertritt. Die Dichtung kann also beispielsweise ein umlaufender Wulst am Ankerschaft sein. Die Dichtung hat den Vorteil, dass sie die erforderliche Mörtelmenge verringert. Des Weiteren vermeidet die Dichtung, dass Mörtel das Spreizelement mit dem Ankerschaft verklebt und ein Nachspreizen verhindert.

In bevorzugter Ausgestaltung der Erfindung weist der Spreizanker zwei Spreizelemente auf, die vorzugsweise axial hintereinander angeordnet sind. Zwei Spreizelemente haben zunächst den Vorteil, dass eine Axialbewegung des Spreizankers beim Aufspreizen und Verankem verringert ist. Weiterer Vorteil ist, dass die Axialbewegung bei Belastung und bei einem Nachspreizen des Spreizankers bei einer Bohrlocherweiterung beispielsweise in Folge einer Rissbildung im Verankerungsgrund verringert ist.

Die Erfindung wird nachfolgend anhand eines in der Zeichnung dargestellten Ausführungsbeispiels näher erläutert. Es zeigen:
- Figur 1: einen erfindungsgemäßen Spreizanker in Seitenansicht; und
- Figur 2: eine Lochscheibe des Spreizankers aus Figur 1 in Stirnansicht.

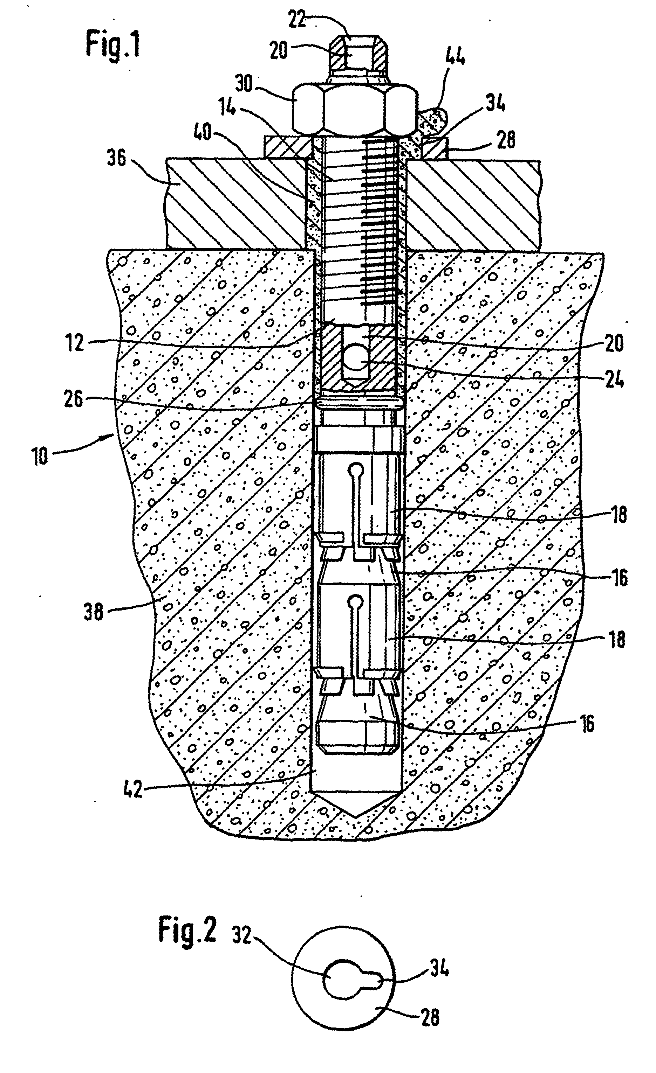

Der in Figur 1 dargestellte, erfindungsgemäße Spreizanker 10 weist einen Ankerschaft 12 auf, der in einem hinteren Bereich mit einem Außengewinde 14 versehen ist und der in einem vorderen Bereich zwei axial voneinander beabstandete Spreizkonen 16 aufweist. Auf die Spreizkonen 16 sind Spreizhülsen 18 aufgesetzt. Die Spreizhülsen 18 bilden Spreizelemente des Spreizankers 10. Die Spreizhülsen 18 sind geschlitzt und durch Einziehen der Spreizkonen 16 aufspreizbar.

Der Ankerschaft 12 weist ein axiales Sackloch 20 auf, das am hinteren Ende des Ankerschafts 12 mit einer Fase 22 mündet. Ein vorderes Ende des Sacklochs 20 ist von einem Querloch 24 durchsetzt. Das axiale Sackloch 20 bildet einen Füllkanal für Mörtel, das Querloch 24 bildet Mörtelaustrittsöffnungen. Das die Mörtelaustrittsöffnungen bildende Querloch 24 ist so am Ankerschaft 12 angeordnet, dass es sich innerhalb eines Bohrlochs befindet, wenn der Spreizanker 10 wie vorgesehen in das Bohrloch eingesetzt ist.

Zwischen dem Querloch 24 und einer hinteren Spreizhülse 18 weist der Ankerschaft 12 eine umlaufende Nut auf, in die ein Dichtring 26 eingesetzt ist.

Auf das hintere, das Gewinde 14 aufweisende Ende des Ankerschafts 12 ist die in Figur 2 dargestellte Lochscheibe 28 aufgesetzt und eine Mutter 30 aufgeschraubt. Die Lochscheibe 28 weist ein schlüssellochförmiges Loch 32 auf, d. h. das Loch 32 weist eine Umfangsausweitung 34 auf, die von der Mutter 30 nicht vollständig überdeckt ist.

Zur sog. Durchsteckmontage wird ein zu befestigender Gegenstand 36 so auf einen Verankerungsgrund 38 aufgesetzt, dass ein Durchsteckloch 40 im zu befestigenden Gegenstand 36 deckungsgleich mit einem Bohrloch 42 im Verankerungsgrund 38 aus beispielsweise Beton ist. Der Spreizanker 12 wird mit den Spreizkonen 16 voran durch das Durchsteckloch 40 hindurch in das Bohrloch 42 eingeführt. Dabei sind die Lochscheibe 28 und die Mutter 30 vorzugsweise bereits auf den Ankerschaft 12 aufgesetzt. Bei einer vorgesehenen Setztiefe des Spreizankers 10 befindet sich das die Mörtelaustrittsöffnungen bildende Querloch 24 versenkt innerhalb des Bohrlochs 42. Durch Anziehen der Mutter 30 werden die Spreizkonen 16 in die die Spreizelemente 18 bildenden Spreizhülsen eingezogen und spreizen die Spreizhülsen 18 auf. Dadurch ist der Spreizanker 10 im Verankerungsgrund 38 verankert und der zu befestigende Gegenstand 36 gegen den Verankerungsgrund 38 gespannt.

Nach der Verankerung des Spreizankers 10 wird Mörtel mit einem nicht dargestellten Injektionsgerät in das den Füllkanal bildende Sackloch 20 im Ankerschaft 12 eingefüllt bzw. eingepresst. Dazu kann eine nicht dargestellte Düse des Injektionsgeräts dichtend an der Fase 22 des Sacklochs 20 angesetzt werden. Der eingefüllte Mörtel tritt durch das Querloch 24 in das Bohrloch 42 aus. Die Dichtung 26 des Spreizankers 12 verhindert, dass der Mörtel im Bohrloch 42 nach vorn in den Bereich der Spreizelemente 18 fließt. Der Mörtel fließt zurück in Richtung einer Mündung des Bohrlochs 42 und weiter in das Durchsteckloch 40 im zu befestigenden Gegenstand 36. Nachdem ein Zwischenraum zwischen dem Spreizanker 10 und dem Bohrloch 42 und dem Durchsteckloch 40 vollständig mit Mörtel gefüllt ist, tritt der Mörtel (bei 44) durch die die Austrittsöffnung bildende Umfangsausweitung 36 des Lochs 32 der Lochscheibe 28 aus. Durch den Mörtelaustritt 44 an der Lochscheibe 28 ist die vollständige Füllung des Bohrlochs 42 und des Durchstecklochs 40 mit Mörtel erkennbar. Nachdem der Mörtel ausgehärtet ist, stützt er den Spreizanker 10 in radialer Richtung im Bohrloch 42 und den zu befestigenden Gegenstand 36 in radialer Richtung am Spreizanker 10 ab. Der zu befestigende Gegenstand 36 ist dadurch spielfrei gegen Querbeanspruchung abgestützt, wobei Querbeanspruchung radial zum Spreizanker 10 und parallel zu einer Oberfläche des Verankerungsgrundes 38 bedeutet. Die spielfreie Querabstützung des zu befestigenden Gegenstandes 36 erhöht insbesondere eine dynamische Querbelastbarkeit der Befestigung des Gegenstandes 36 am Verankerungsgrund 38.

Um ein Nachspreizen des Spreizankers 10 bei einer Erweiterung des Bohrlochs 32 beispielsweise in Folge einer Rissbildung im Verankerungsgrund 38 zu ermöglichen, wird ein Mörtel gewählt, der nicht fest mit dem Spreizanker 10 und/oder dem Bohrloch 42 und dem Durchsteckloch 40 verklebt. Es kann beispielsweise auch ein Trennmittel aufgetragen werden. Bei einer Erweiterung des Bohrlochs 42 bewirkt eine durch das Anziehen der Mutter 30 verursachte Zugspannung ein tieferes Einziehen der Spreizkonen 16 in die Spreizelemente 18 und dadurch ein Nachspreizen des Spreizankers 10. Durch das Vorsehen von zwei Spreizkonen 16 und zwei Spreizelementen 18 ist die Axialbewegung beim Nachspreizen gering. Auch eine axiale Stauchbarkeit des ausgehärteten Mörtels ermöglicht die zum Nachspreizen erforderliche Axialbeweglichkeit des Spreizankers 10. Dabei sollte allerdings auf eine zur Querabstützung des zu befestigenden Gegenstandes 36 ausreichende Härte des Mörtels geachtet werden.

Auch eine sog. Vorsteckmontage ist möglich, bei derder Spreizanker 10 zunächst in das Bohrloch 42 im Verankerungsgrund 38 eingeführt und anschließend der zu befestigende Gegenstand 36, die Lochscheibe 28 und die Mutter 30 auf den Ankerschaft 12 aufgesetzt werden. Die Verankerung einschließlich des Einfüllens des Mörtels erfolgen in sinngemäß gleicher Weise wie oben zur Durchsteckmontage beschrieben.

## Patentansprüche

1. Spreizanker, mit einem Ankerschaft, mit einem auf den Ankerschaft aufgesetzten Spreizelement, das zur Verankerung des Spreizankers in einem Bohrloch aufspreizbar ist, und mit einer auf den Ankerschaft aufsetzbaren Lochscheibe, **dadurch gekennzeichnet, dass** der Ankerschaft (12) einen Füllkanal (20) zum Einfüllen von Mörtel in ein Bohrloch (42), in welches der Spreizanker (10) eingesetzt ist, und dass die Lochscheibe (28) eine Austrittsöffnung (34) für in das Bohrloch (42) eingefüllten Mörtel aufweist.

2. Spreizanker nach Anspruch 1, **dadurch gekennzeichnet, dass** die Lochscheibe (28) ein Loch (32) für den Ankerschaft (12) des Spreizankers (10) und eine Umfangsausweitung des Lochs (32) als Austrittsöffnung (34) für den Mörtel aufweist.

3. Spreizanker nach Anspruch 2, **dadurch gekennzeichnet, dass** die Lochscheibe (28) ein schlüssellochförmiges Loch (32) aufweist.

4. Spreizanker nach Anspruch 1, **dadurch gekennzeichnet, dass** der Füllkanal (20) im Ankerschaft (12) des Spreizankers (10) eine Mörtelaustrittsöffnung (24) aufweist, die sich innerhalb des Bohrlochs (42) in einem Verankerungsgrund (38) befindet, wenn der Spreizanker (10) wie vorgesehen gesetzt ist.

5. Spreizanker nach Anspruch 1, **dadurch gekennzeichnet, dass** der Spreizanker (10) eine Dichtung (26) zwischen einer Mörtelaustrittsöffnung (24) des Füllkanals (20) und dem Spreizelement (18) aufweist.

6. Spreizanker nach Anspruch 1, **dadurch gekennzeichnet, dass** der Spreizanker (10) zwei Spreizelemente (18) aufweist.

## Claims

1. Expansible anchor having an anchor shank, having an expansion element which is mounted on the anchor shank and which can be expanded for anchoring the expansible anchor in a drilled hole, and having a washer arranged to be mounted on the anchor shank, **characterised in that** the anchor shank (12) has an introduction channel (20) for introducing mortar into a drilled hole (42) in which the expansible anchor (10) has been inserted; and the washer (28) has an outlet aperture (34) for mortar introduced into the drilled hole (42).

2. Expansible anchor according to claim 1, **characterised in that** the washer (28) has a hole (32) for the anchor shank (12) of the expansible anchor (10) and, as the outlet aperture (34) for the mortar, a peripheral extension to the hole (32).

3. Expansible anchor according to claim 2, **characterised in that** the washer (28) has a keyhole-shaped hole (32).

4. Expansible anchor according to claim 1, **characterised in that** the introduction channel (20) in the anchor shank (12) of the expansible anchor (10) has a mortar outlet aperture (24), which is located within the hole (42) drilled in the anchoring substrate (38) when the expansible anchor (10) has been installed as intended.

5. Expansible anchor according to claim 1, **characterised in that** the expansible anchor (10) has a seal (26) between a mortar outlet aperture (24) of the introduction channel (20) and the expansion element (18).

6. Expansible anchor according to claim 1, **characterised in that** the expansible anchor (10) has two expansion elements (18).

## Revendications

1. Boulon d'ancrage extensible, avec une verge d'ancre, avec un element extensible pose sur la verge d'ancre qui peut être déployé dans une forure en vue de l'ancrage du boulon d'ancrage extensible, et avec une plaque perforée pouvant être posée sur la verge d'ancre, **caractérisé en ce que** la verge d'ancre (12) présente un canal de remplissage (20) destiné au remplissage de mortier dans une forure (42) dans laquelle le boulon d'ancrage extensible (10) est inséré, et **en ce que** la plaque perforée (28) présente un orifice de sortie (34) pour du mortier versé dans la forure (42).

2. Boulon d'ancrage extensible selon la revendication 1, **caractérisé en ce que** la plaque perforée (28) présente un trou (32) pour la verge d'ancre (12) du boulon d'ancrage extensible (10) et une extension périphérique du trou (32) en tant qu'orifice de sortie (34) pour le mortier.

3. Boulon d'ancrage extensible selon la revendication 2, **caractérisé en ce que** la plaque perforée (28) présente un trou (32) en forme de trou de serrure.

4. Boulon d'ancrage extensible selon la revendication 1, **caractérisé en ce que** le canal de remplissage (20) dans la verge d'ancre (12) du boulon d'ancrage extensible (10) présente un orifice de sortie de mortier (24) qui se trouve ä l'intérieur de la forure (42) dans une base d'ancrage (38) lorsque le boulon d'ancrage extensible (10) est pose comme prévu.

5. Boulon d'ancrage extensible selon la revendication 1, **caractérisé en ce que** le boulon d'ancrage extensible (10) présente un joint d'étanchéité (26) entre un orifice de sortie de mortier (24) du canal de remplissage (20) et l'élément extensible (18).

6. Boulon d'ancrage extensible selon la revendication 1, **caractérisé en ce que** le boulon d'ancrage extensible (10) présente deux éléments extensibles (18).
